# EUROPEAN PATENT SPECIFICATION

(11) **EP 3 546 185 B1**
(45) Date of publication and mention of the grant of the patent: **04.11.2020**
(21) Application number: 19164221.4
(22) Date of filing: 21.03.2019
(51) Int. Cl.: B29C 45/76, B29C 45/40

(54) **INJECTION MOLDING MACHINE**
SPRITZGIESSMASCHINE
MACHINE DE MOULAGE À INJECTION

(30) Priority: 30.03.2018 JP 2018068046
(43) Date of publication of application: 02.10.2019
(73) Proprietor: Sumitomo Heavy Industries, Ltd., Tokyo 141-6025 (JP)
(72) Inventor: HIRANO, Tomohiro, Chiba-shi, Chiba, 263-0001, (JP); KITAGUCHI, Naoki, Chiba-shi, Chiba, 263-0001, (JP)
(74) Representative: Louis Pöhlau Lohrentz

(56) References cited:
- EP-A1- 3 168 028
- AT-A2- 510 305
- US-A1- 2004 012 108

## Description

### BACKGROUND OF THE INVENTION

### Field of the Invention

Certain embodiment of the present invention relates to an injection molding machine.

### Description of Related Art

An injection molding machine includes a mold clamping unit and an injection unit. The mold clamping unit performs closing, clamping, and opening of a mold, the injection unit injects a liquid molding material into a cavity space formed in the mold, and thereafter, the liquid molding material is solidified while a holding pressure is applied to the mold. After the mold clamping unit opens the mold, an ejector rod attached to the ejector unit ejects a movable member in the mold through a through-hole in the mold. A cured material of a resin solidified in the cavity space is pushed out from the inside of the mold by the movable member ejected (is moved forward) by the ejector rod and is collected as a molding product.

The mold clamping unit of the injection molding machine has a pair of platens for attachment of the mold. As a method of attaching the mold to the platen, there is a method of fastening the mold to the platen by a bolt, a method of attaching a magnet clamp to a fixing surface of the platen and attaching the mold to a main surface (mold attachment surface) of the magnet clamp using a magnetic force of the magnet clamp, or the like. Particularly, in a case where the mold is attached to the platen using the magnet clamp, attachment or detachment of the mold can be performed by generating or eliminating the magnetic force of the magnet clamp on a mold attachment surface, and thus, an exchange work of the mold can be easily performed.

In a case where the mold is exchanged, in general, a part of the mold to be fixed to the platen is changed according to a structure of the mold. Accordingly, in the case where the mold is exchanged, it is necessary to correctly attach the mold to the platen before the injection molding machine is used.

Accordingly, for example, Japanese Unexamined Patent Publication No. 2017-080929 discloses an injection molding system which includes bolt position related information recognition means for recognizing a mounting position of a bolt for each mounted article of an injection molding machine, and bolt position storage means for storing a mounting position of the bolt recognized by the bolt position related information recognition means or the mounting position of the bolt and a phase of the bolt. In the injection molding system, bolt attachment/detachment means performs attachment/detachment of the bolt to/from the mounted article, based on the mounting position of the bolt stored in the bolt position storage means, and the mounting position of the bolt and the phase of the bolt. US Patent Application US 2004/012108 A1 discloses an ejector unit for protruding a molded product out of a mold in an electrically operated injection molding machine. Austrian Patent Application AT 510 305 A2 discloses a control device for an injection molding machine with a first stop element moved by a drive unit. EP Patent Application EP 3 168 028 A1 discloses an injection molding information management device in which abnormality of a part used in injection molding can be accurately detected.

### SUMMARY OF THE INVENTION

However, Japanese Unexamined Patent Publication No. 2017-080929 does not describe to check an attachment position of an ejector rod attached to an ejector unit or the number of required ejector rods. In a case where a mold is exchanged, the attachment positions of the ejector rods or the number of the required ejector rods are dependent on a structure of the mold, and thus, the attachment positions or the number of the ejector rods vary.

The ejector rod transmits ejection power to a movable member in a mold through a through-hole in the mold in order to eject a molding product. Accordingly, if the mold is attached to an injection molding machine and is used in a state where the attachment position or the like of the ejector rod is false, there is a possibility that the ejector rod collides with the mold. In addition, the ejector rod collides with the mold, and thus, there is a possibility that the ejector rod is deformed.

Particularly, in a case where a mold is fixed to a platen using a magnet clamp, if the ejector rod collides with the mold, there is a possibility that the ejector rod pushes the mold and the mold falls. In addition, if the mold is attached to the injection molding machine so as to be used in a case where the lengths of the ejector rods are different from each other and attachment of the ejector rod attached to a crosshead is loose, there is a possibility that a direction of the ejector rod is changed by impact generated when the ejector rod collides with a movable member in the mold. As aresult, the ejector rod collides with the through-hole of the mold or the like, and there is a possibility that the mold falls.

The present invention is made in consideration of the above-described circumstances, and a main object thereof is to provide an injection molding machine capable of preventing the ejector rod from colliding with the mold.

In order to achieve the object, according to an aspect of the present invention, there is provided an injection molding machine including: an ejector rod for ejecting a molding product; a crosshead to which the ejector rod is attached; and a control unit which controls a forward movement or rearward movement of the ejector rod, in which the control unit includes a storage unit in which information on an attachment of the ejector rod with respect to the crosshead is stored, an acquisition unit which acquires the information on the attachment of the ejector rod with respect to the crosshead, and a collation unit which collates the information stored in the storage unit and the information acquired by the acquisition unit.

According to the aspect of the present invention, the injection molding machine capable of preventing the ejector rod from colliding with the mold is provided.

### BRIEF DESCRIPTION OF THE DRAWINGS

Fig. 1 is a view showing a state when a mold opening of an injection molding machine according to an embodiment is completed.
Fig. 2 is a view showing a state when a mold of the injection molding machine according to the embodiment is clamped.
Fig. 3 is a view showing a state when an ejector unit according to the embodiment stands by.
Fig. 4 is a view showing a state when the ejector unit according to the embodiment ejects a molding product.
Fig. 5 is a view showing a main surface of a crosshead on a movable platen side.
Fig. 6 is a functional block diagram showing components of a control unit according to the embodiment.
Fig. 7 is a view showing an example of hole position information of through-holes of a movable mold.
Fig. 8 is a view showing an example of positions of the through-holes of the movable platen.
Fig. 9 is a view showing an example of positions of through-holes of a magnet clamp.
Fig. 10 is a flowchart explaining a method of checking attachment states of ejector rods.
Fig. 11 is a view showing an example of a state when the ejector rods attached to the crosshead through the through-holes of the movable platen and the magnet clamp are viewed from the movable mold side.
Fig. 12 is a view showing another example of the state when the ejector rods attached to the crosshead through the through-holes of the movable platen and the magnet clamp are viewed from the movable mold side.
Fig. 13 is a partially enlarged sectional view showing an example of the ejector rod on which a pressure sensor is mounted.
Fig. 14 is a view when viewed in a direction I-I of Fig. 13.
Fig. 15 is a side view showing an example of an ejector unit on which a camera is mounted.
Fig. 16 is a side view showing an example of an ejector unit on which a laser irradiation unit is mounted.

### DETAILED DESCRIPTION OF THE INVENTION

Hereinafter, embodiments of the present invention will be described with reference to the drawings. In each drawing, the same or corresponding reference numerals are assigned to the same or corresponding configurations, and descriptions thereof are omitted.

### (Injection Molding machine)

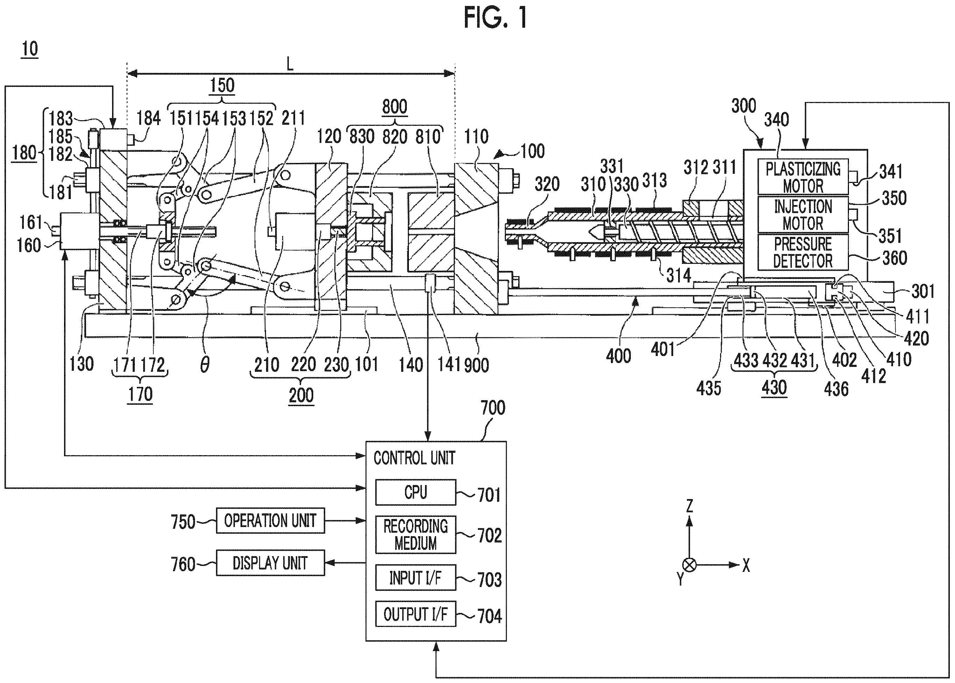

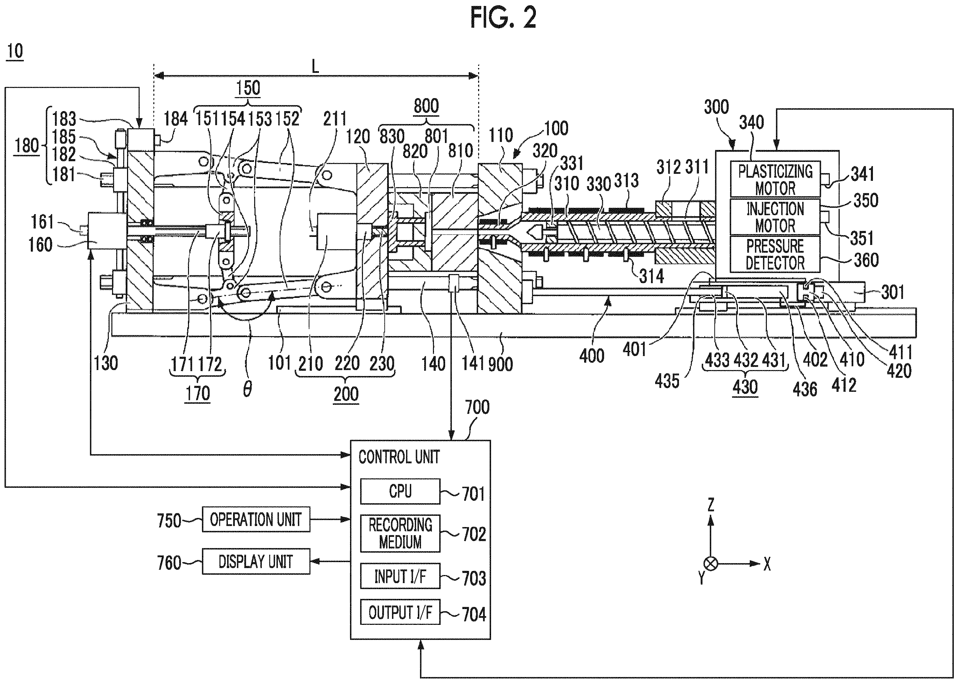

Fig. 1 is a diagram showing a state when a mold opening of an injection molding machine according to an embodiment is completed. Fig. 2 is a diagram showing a state when a mold of the injection molding machine according to the embodiment is clamped. In Figs. 1 and 2, an X direction, a Y direction, and a Z direction are directions perpendicular to each other. The X direction and the Y direction indicate a horizontal direction, and the Z direction indicates a vertical direction. In a case where a mold clamping unit 100 is a horizontal type mold clamping unit, the X direction is mold opening and closing directions, and the Y direction is a width direction of an injection molding machine 10. As shown in Figs. 1 and 2, the injection molding machines 10 includes the mold clamping unit 100, an ejector unit 200, an injection unit 300, a movement unit 400, a control unit 700, and a frame 900. Hereinafter, each component of the injection molding machine 10 will be described.

### (Mold Clamping Unit)

In descriptions of the mold clamping unit 100, a movement direction (right direction in Figs. 1 and 2) of a movable platen 120 when a mold is closed is defined as a front side, and a movement direction (left direction in Figs. 1 and 2) of the movable platen 120 when the mold is opened is defined as a rear side.

The mold clamping unit 100 performs closing, clamping, and opening on a mold unit 800. For example, the mold clamping unit 100 is a horizontal type clamping unit and the mold opening and closing directions are the horizontal direction. The mold clamping unit 100 includes a stationary platen 110, the movable platen 120, a toggle support 130, a tie bar 140, a toggle mechanism 150, a mold clamping motor 160, a motion conversion mechanism 170, and a mold space adjustment mechanism 180.

The stationary platen 110 is fixed to the frame 900. A stationary mold 810 is attached to a surface of the stationary platen 110 facing the movable platen 120.

The movable platen 120 is movable in the mold opening and closing directions with respect to the frame 900. A guide 101 which guides the movable platen 120 is placed on the frame 900. A movable mold 820 is attached to a surface of the movable platen 120 facing the stationary platen 110.

The movable platen 120 moves forward or rearward with respect to the stationary platen 110, and thus, closing, clamping, and opening of the mold are performed. The mold unit 800 includes the stationary mold 810 and the movable mold 820.

The toggle support 130 is connected so as to be separated from the stationary platen 110, and is placed on the frame 900 to be movable in mold opening and closing directions . In addition, the toggle support 130 may be movable along a guide which is placed on the frame 900. The guide of the toggle support 130 may be also used as the guide 101 of the movable platen 120.

In addition, in the present embodiment, the stationary platen 110 is fixed to the frame 900, and the toggle support 130 is movable in the mold opening and closing directions with respect to the frame 900. However, the toggle support 130 may be fixed to the frame 900, and the stationary platen 110 may be movable in the mold opening and closing directions with respect to the frame 900.

The stationary platen 110 and the toggle support 130 are connected to each other with a gap L in the mold opening and closing directions by the tie bar 140. A plurality of (for example, four) tie bars 140 may be used. The tie bars 140 are parallel in the mold opening and closing directions and extend according to a mold clamping force. A tie bar strain detector 141 which detects strain of the tie bar 140 may be provided in at least one tie bar 140. The tie bar strain detector 141 sends a signal indicating a detection result to the control unit 700. The detection result of the tie bar strain detector 141 is used for detection or the like of the mold clamping force.

In addition, in the present embodiment, the tie bar strain detector 141 is used as a mold clamping force detector which detects the mold clamping force. However, the present invention is not limited to this. The mold clamping force detector is not limited to a strain gauge type detector, and may be a piezoelectric type detector, a capacitance type detector, a hydraulic type detector, an electromagnetic type detector, or the like, and an attachment position of the mold clamping force detector is also not limited to the tie bar 140.

The toggle mechanism 150 is disposed between the movable platen 120 and the toggle support 130 and moves the movable platen 120 in the mold opening and closing directions with respect to the toggle support 130. The toggle mechanism 150 includes a crosshead 151, a pair of link groups, or the like. Each link group includes a first link 152 and a second link 153 which are bendably/strechably connected to each other by pins or the like. The first link 152 is attached to the movable platen 120 so as to be oscillated by pins or like and the second link 153 is attached to the toggle support 130 so as to be oscillated by pins or the like. The second link 153 is attached to the crosshead 151 via a third link 154. If the crosshead 151 moves forward or rearward with respect to the toggle support 130, the first link 152 and the second link 153 are bent and stretched and the movable platen 120 moves forward or rearward with respect to the toggle support 130.

In addition, a configuration of the toggle mechanism 150 is not limited to the configuration shown in Figs. 1 and 2. For example, in Figs. 1 and 2, the number of nodes of each link group is five. However, the number of nodes may be four, and one end portion of the third link 154 may be connected to a node between the first link 152 and the second link 153.

The mold clamping motor 160 is attached to the toggle support 130 and operates the toggle mechanism 150. The mold clamping motor 160 moves the crosshead 151 forward or rearward with respect to the toggle support 130, and thus, the first links 152 and the second links 153 are bent and stretched, and the movable platen 120 moves forward or rearward with respect to the toggle support 130. The mold clamping motor 160 is directly connected to the motion conversion mechanism 170. However, the mold clamping motor 160 may be connected to the motion conversion mechanism 170 via a belt, a pulley, or the like.

The motion conversion mechanism 170 converts a rotary motion of the mold clamping motor 160 into a linear motion of the crosshead 151. The motion conversion mechanism 170 includes a screw shaft 171 and a screw nut 172 which is screwed to the screw shaft 171. A ball or a roller may be interposed between the screw shaft 171 and the screw nut 172.

The mold clamping unit 100 performs a mold closing process, a mold clamping process, a mold opening process, or the like under the control of the control unit 700.

In the mold closing process, the mold clamping motor 160 is driven to move the crosshead 151 forward to a mold closing completion position at a set speed. Accordingly, the movable platen 120 moves forward and the movable mold 820 comes into contact with the stationary mold 810. For example, a position or speed of the crosshead 151 is detected using a mold clamping motor encoder 161 or the like. The mold clamping motor encoder 161 detects the rotation of the mold clamping motor 160 and sends a signal indicating the detection result to the control unit 700. In addition, a crosshead position detector which detects the position of the crosshead 151 and a crosshead speed detector which detects the speed of the crosshead 151 are not limited to the mold clamping motor encoder 161, and a general detector can be used. In addition, a movable platen position detector which detects the position of the movable platen 120 and a movable platen speed detector which detects the speed of the movable platen 120 are not limited to the mold clamping motor encoder 161, and a general detector can be used.

In the mold clamping process, the mold clamping motor 160 is further driven to further move the crosshead 151 forward from the mold closing completion position to a mold clamping position, and thus, a mold clamping force is generated. When the mold is clamped, a cavity space 801 (refer to Fig. 2) is formed between the movable mold 820 and the stationary mold 810, and the cavity space 801 is filled with a liquid molding material by the injection unit 300. A filled molding material is solidified, and thus, a molding product can be obtained. A plurality of cavity spaces 801 may be provided, and in this case, a plurality of molding products can be simultaneously obtained.

In the mold opening process, the mold clamping motor 160 is driven to move the crosshead 151 rearward from the mold opening start position to a mold opening completion position at a set speed. Accordingly, the movable platen 120 moves rearward, and the movable mold 820 is separated from the stationary mold 810. Thereafter, the ejector unit 200 ejects the molding product from the movable mold 820.

Setting conditions in the mold closing process and the mold clamping process are collectively set as a series of setting conditions. For example, the speed or positions (including mold closing start position, speed switching position, mold closing completion position, and mold clamping position) of the crosshead 151 and the mold clamping force in the mold closing process and the mold clamping process are collectively set as a series of setting conditions. The mold opening/closing start position, the speed switching position, the mold closing completion position, and the mold clamping position are arranged in this order from the rear side to the front side and indicate start points and end points of sections where the speed is set. The speed is set for each section. The speed switching position may be one or more. The speed switching position may not be set. Only one of the mold clamping position and the mold clamping force may be set.

Setting conditions are similarly set in the mold opening process. For example, the speed or positions (including mold opening start position, speed switching position, and mold opening completion position) of the crosshead 151 in the mold opening process are collectively set as a series of setting conditions. The mold opening start position, the speed switching position, and the mold opening completion position are arranged in this order from the front side to the rear side and indicate start points and end points of sections where the speed is set. The speed is set for each section. The speed switching position may be one or more. The speed switching position may not be set. The mold opening start position and the mold clamping position may be the same as each other. In addition, the mold opening completion position and the mold opening/closing start position may be the same as each other.

In addition, instead of the speed, the positions, or the like of the crosshead 151, a speed, positions, or the like of the movable platen 120 may be set. Moreover, instead of the position (for example, the mold clamping position) of the crosshead or the position of the movable platen, the mold clamping force may be set.

Meanwhile, the toggle mechanism 150 amplifies a driving force of the mold clamping motor 160 and transmits the amplified driving force to the movable platen 120. An amplification magnification of the toggle mechanism 150 is also referred to as a toggle magnification. The toggle magnification is changed according to an angle θ (hereinafter, also referred to a "link angle θ") between the first link 152 and the second link 153. The link angle θ is obtained from the position of the crosshead 151. When the link angle θ is 180°, the toggle magnification becomes the maximum value.

In a case where a space of the mold unit 800 is changed by a change of the mold unit 800, a temperature change of the mold unit 800, or the like, a mold space adjustment is performed such that a predetermined mold clamping force is obtained when the mold is clamped. For example, in the mold space adjustment, the gap L between the stationary platen 110 and the toggle support 130 is adjusted such that the link angle θ of the toggle mechanism 150 at the time of a touch type where the movable mold 820 comes into contact with the stationary mold 810 becomes a predetermined angle.

The mold clamping unit 100 includes the mold space adjustment mechanism 180 which performs the mold space adjustment by adjusting the gap L between the stationary platen 110 and the toggle support 130. The mold space adjustment mechanism 180 includes a screw shaft 181 which is formed on a rear end portion of the tie bar 140, a screw nut 182 which is rotatably held by the toggle support 130, and a mold space adjustment motor 183 which rotates the screw nut 182 screwed to the screw shaft 181.

The screw shaft 181 and the screw nut 182 are provided for each tie bar 140. A rotation of the mold space adjustment motor 183 may be transmitted to a plurality of screw nuts 182 via a rotation transmission portion 185. The plurality of screw nuts 182 can be synchronously rotated with each other. In addition, it is possible to rotate the plurality of screw nuts 182 individually by changing a transmission path of the rotation transmission portion 185.

For example, the rotation transmission portion 185 includes a gear or the like. In this case, a driven gear is formed on an outer periphery of each screw nut 182, a drive gear is attached to an output shaft of the mold space adjustment motor 183, and an intermediate gear which engages with a plurality of driven gears and drives gears is rotatably held by a center portion of the toggle support 130. In addition, the rotation transmission portion 185 may include a belt, a pulley, or the like instead of the gear.

An operation of the mold space adjustment mechanism 180 is controlled by the control unit 700. The control unit 700 drives the mold space adjustment motor 183 to rotate the screw nut 182, and thus, the position of the toggle support 130 which rotatably holds the screw nut 182 with respect to the stationary platen 110 is adjusted, and the gap L between the stationary platen 110 and the toggle support 130 is adjusted.

In addition, in the present embodiment, the screw nut 182 may be rotatably held by the toggle support 130 and the tie bar 140 on which the screw shaft 181 is formed is fixed to the stationary platen 110. However, the present invention is not limited to this.

For example, the screw nut 182 may be rotatably held by the stationary platen 110 and the tie bar 140 may be fixed to the toggle support 130. In this case, it is possible to adjust the gap L by rotating the screw nut 182.

In addition, the screw nut 182 may be fixed to the toggle support 130 and the tie bar 140 may be held rotatably by the stationary platen 110. In this case, it is possible to adjust the gap L by rotating the tie bar 140.

In addition, the screw nut 182 maybe fixed to the stationary platen 110 and the tie bar 140 may be held rotatably by the toggle support 130. In this case, it is possible to adjust the gap L by rotating the tie bar 140.

The gap L is detected using a mold space adjustment motor encoder 184. The mold space adjustment motor encoder 184 detects a rotation amount or a rotation direction of the mold space adjustment motor 183 and sends a signal indicating a detection result to the control unit 700. The detection result of the mold space adjustment motor encoder 184 is used to monitor or control the position of the toggle support 130 or the gap L. In addition, a toggle support position detector which detects the position of the toggle support 130 and a gap detector which detects the gap L are not limited to the mold space adjustment motor encoder 184, and a general encoder can be used.

In the mold space adjustment mechanism 180, the gap L is adjusted by rotating one of the screw shaft 181 and the screw nut 182 which are screwed to each other. A plurality of the mold space adjustment mechanisms 180 may be used, and a plurality of the mold space adjustment motors 183 may be used.

In addition, in the present embodiment, the mold space adjustment mechanism 180 includes the screw shaft 181 which is formed on the tie bar 140 and the screw nut 182 which is screwed to the screw shaft 181 in order to adjust the gap L. However, the present invention is not limited to this.

For example, the mold space adjustment mechanism 180 may have a tie bar temperature controller which adjusts a temperature of the tie bar 140. The tie bar temperature controller is attached to each tie bar 140, and the temperatures of the plurality of tie bars 140 are adjusted to be in conjunction with each other. As the temperature of the tie bar 140 increases, the tie bar 140 is lengthened by thermal expansion, and thus, the gap L increases. The temperatures of the plurality of tie bars 140 can be adjusted independently.

For example, the tie bar temperature controller includes a heating unit such as a heater and adjusts the temperature of the tie bar 140 by heating. The tie bar temperature controller includes a cooler such as a water cooling jacket and may adjust the temperature of the tie bar 140 by cooling. The tie bar temperature controller may include both the heating unit and the cooler.

In addition, the mold clamping unit 100 of the present embodiment is a horizontal type mold clamping unit in which the mold opening and closing directions are the horizontal direction. However, the mold clamping unit 100 may be a vertical type mold clamping unit in which the mold opening and closing directions are the up-down direction. The vertical type mold clamping unit has a lower platen, an upper platen, a toggle support, a tie bar, a toggle mechanism, a mold clamping motor, or the like. One of the lower platen and the upper platen is used for a stationary platen, and the other one is used for a movable platen. A lower mold is attached to the lower platen and an upper mold is attached to the upper platen . The upper mold and the lower mold constitutes a mold unit. The lower mold may be attached to the lower platen via a rotary table. The toggle support is disposed below the lower platen and is connected to the upper platen via the tie bar. The tie bar connects the upper platen and the toggle support with a gap therebetween in the mold opening and closing directions. The toggle mechanism is disposed between the toggle support and the lower platen and lifts and lowers the movable platen. The mold clamping motor operates the toggle mechanism. In a case where the mold clamping unit is the vertical type mold clamping unit, in general, the number of the tie bars is three. In addition, the number of the tie bars is not limited to three.

In addition, the mold clamping unit 100 of the present embodiment has the mold clamping motor 160 as a drive source. However, the mold clamping unit 100 may have a hydraulic cylinder instead of the mold clamping motor 160. In addition, the mold clamping unit 100 may have a linear motor for opening and closing a mold and may have an electromagnet for clamping a mold.

### (Ejector Unit)

Similarly to the descriptions of the mold clamping unit 100, in descriptions of the ejector unit 200, the movement direction (right direction in Figs. 1 and 2) of the movable platen 120 when the mold is closed is defined as the front side, and the movement direction (left direction in Figs. 1 and 2) of the movable platen 120 when the mold is opened is defined as the rear side.

The ejector unit 200 ejects the molding product from the mold unit 800. The ejector unit 200 includes an ejector motor 210, a motion conversion mechanism 220, an ejector rod 230, or the like.

The ejector motor 210 is attached to the movable platen 120. Although described in detail later, the ejector motor 210 is connected to the motion conversion mechanism 220 via a belt, a pulley, or the like.

The motion conversion mechanism 220 converts a rotary motion of the ejector motor 210 into a linear motion of the ejector rod 230. The motion conversion mechanism 220 includes a screw shaft and a screw nut which is screwed to the screw shaft. A ball or a roller may be interposed between the screw shaft and the screw nut.

The ejector rod 230 can move forward or rearward through a through-hole of the movable platen 120. A front end portion of the ejector rod 230 comes into contact with a movable member 830 which is disposed to be movable forward or rearward inside the movable mold 820. The front end portion of the ejector rod 230 may be connected to the movable member 830 or may not be connected to the movable member 830.

The ejector unit 200 performs an ejection process under the control of the control unit 700.

In the ejection process, the ejector motor 210 is driven to move the ejector rod 230 forward from a standby position to an ejection position at a set speed, and thus, the movable member 830 moves forward and the molding product is ejected. Thereafter, the ejector motor 210 is driven to move the ejector rod 230 rearward at a set speed, and thus, the movable member 830 moves rearward to an original standby position. For example, a position or speed of the ejector rod 230 is detected using an ejector motor encoder 211. The ejector motor encoder 211 detects the rotation of the ejector motor 210 and sends a signal indicating a detection result to the control unit 700. In addition, an ejector rod position detector which detects the position of the ejector rod 230 and an ejector rod speed detector which detects the speed of the ejector rod 230 are not limited to the ejector motor encoder 211, and a general detector can be used.

### (Injection Unit)

Unlike the descriptions of the mold clamping unit 100 or the descriptions of the ejector unit 200, in descriptions of the injection unit 300, a movement direction (left direction in Figs. 1 and 2) of a screw 330 during filling is referred to as a front side, and a movement direction (right direction in Figs. 1 and 2) of the screw 330 during plasticizing is referred to as a rear side.

The injection unit 300 is installed on a slide base 301 which is movable forward or rearward with respect to the frame 900, and is movable forward or rearward with respect to the mold unit 800. The injection unit 300 comes into contact with the mold unit 800, and the cavity space 801 inside the mold unit 800 is filled with the molding material by the injection unit 300. For example, the injection unit 300 includes a cylinder 310, a nozzle 320, the screw 330, a plasticizing motor 340, an injection motor 350, a pressure detector 360, or the like.

The cylinder 310 heats the molding material which is supplied from a supply port 311 to the inner portion of the cylinder 310. For example, the molding material includes a resin or the like. For example, the molding material is formed into pellets and is supplied to the supply port 311 in a solid state. The supply port 311 is formed on a rear portion of the cylinder 310. A cooler 312 such as a water cooling cylinder is provided on an outer periphery of the rear portion of the cylinder 310. A heating unit 313 such as a band heater and the temperature detector 314 are provided on an outer periphery of the cylinder 310 on a front side of the cooler 312.

The cylinder 310 is divided into a plurality of zones in an axial direction (right and left directions in Figs. 1 and 2) of the cylinder 310. The heating unit 313 and the temperature detector 314 are provided in each zone. The control unit 700 controls the heating unit 313 such that a detection temperature of the temperature detector 314 becomes a set temperature for each zone.

The nozzle 320 is provided on the front end portion of the cylinder 310 and presses the mold unit 800. The heating unit 313 and the temperature detector 314 are provided on an outer periphery of the nozzle 320. The control unit 700 controls the heating unit 313 such that a detection temperature of the nozzle 320 becomes a set temperature.

The screw 330 is disposed in the cylinder 310 so as to be rotatable and movable forward or rearward. If the screw 330 rotates, the molding material is fed forward along spir al grooves of the screw 330. The molding material is gradua lly melted by heat from the cylinder 310 while being fed fo rward. The liquid molding material is fed to a front portio n of the screw 330 and is accumulated in the front portion of the cylinder 310, and thus, the screw 330 moves rearward . Thereafter, if the screw 330 moves forward, the liquid mo lding material accumulated in front of the screw 330 is inj ected from the nozzle 320 and the inside of the mold unit 8 00 is filled with the liquid molding material.

A backflow prevention ring 331 is attached to a front portion of the screw 330 to be movable forward or rearward as a backflow prevention valve which prevents backflow of the molding material from the front side of the screw 330 toward the rear side when the screw 330 is pushed forward.

When the screw 330 moves forward, the backflow prevention ring 331 is pushed toward the rear side by the pressure of the molding material in front of the screw 330 and moves rearward relatively to the screw 330 to a close position (refer to Fig. 2) at which a flow path of the molding material is closed. Accordingly, the molding material accumulated in front of the screw 330 is prevented from flowing toward the rear side.

Meanwhile, when the screw 330 rotates, the backflow prevention ring 331 is pushed toward the front side by the pressure of the molding material fed forward along the spiral grooves of the screw 330 and moves forward relatively to the screw 330 to an open position (refer to Fig. 1) at which the flow path of the molding material is open. Accordingly, the molding material is fed to the front side of the screw 330.

The backflow prevention ring 331 may be either a co-rotation type ring which rotates together with the screw 330 or a non-co-rotation type ring which does not rotate together with the screw 330.

In addition, the injection unit 300 may include a drive source which moves the backflow prevention ring 331 forward or rearward with respect to the screw 330 between the open position and the close position.

The plasticizing motor 340 rotates the screw 330. A drive source which rotates the screw 330 is not limited to the plasticizing motor 340 and may be a hydraulic pump or the like, for example.

The injection motor 350 moves the screw 330 forward or rearward. A motion conversion mechanism or the like which converts a rotary motion of the injection motor 350 into a linear motion of the screw 330 is provided between the injection motor 350 and the screw 330. For example, the motion conversion mechanism includes a screw shaft and a screw nut which is screwed to the screw shaft. A ball, a roller, or the like may be provided between the screw shaft and the screw nut. A drive source which moves the screw 330 forward or rearward is not limited to the injection motor 350 and may be a hydraulic cylinder, for example.

The pressure detector 360 detects a force transmitted between the injection motor 350 and the screw 330. The detected force is converted into a pressure by the control unit 700. The pressure detector 360 is provided on a transmission path of the force between the injection motor 350 and the screw 330 and detects the force applied to the pressure detector 360.

The pressure detector 360 sends a signal indicating a detection result to the control unit 700. The detection result of the pressure detector 360 is used to control or monitor a pressure received by the screw 330 from the molding material, a back pressure with respect to the screw 330, a pressure applied from the screw 330 to the molding material, or the like.

The injection unit 300 performs a plasticizing process, a holding pressure process, a filling process, or the like under the control of the control unit 700.

In the plasticizing process, the plasticizing motor 340 is driven to rotate the screw 330 at a set rotational speed and the molding material is fed forward along the spiral grooves of the screw 330 by the screw 330. According to this, the molding material is gradually melted. The screw 330 moves rearward as the liquid molding material is fed to the front side of the screw 330 and is accumulated in front of the cylinder 310. For example, the rotational speed of the screw 330 is detected using a plasticizing motor encoder 341. The plasticizing motor encoder 341 detects the rotation of the plasticizing motor 340 and sends a signal indicating a detection result to the control unit 700. In addition, a screw rotational speed detector which detects the rotational speed of the screw 330 is not limited to the plasticizing motor encoder 341, and a general detector may be used.

In the plasticizing process, in order to restrict an abrupt rearward movement of the screw 330, the injection motor 350 may be driven so as to apply a set back pressure to the screw 330. For example, the back pressure with respect to the screw 330 is detected using the pressure detector 360. The pressure detector 360 sends a signal indicating a detection result to the control unit 700. If the screw 330 moves rearward to a plasticizing completion position and a predetermined amount of the molding materials is accumulated in front of the screw 330, the plasticizing process is completed.

In the filling process, the injection motor 350 is driven to move the screw 330 forward at a set speed, and the cavity space 801 inside the mold unit 800 is filled with the liquid molding material accumulated in front of the screw 330. For example, a position or speed of the screw 330 is detected using an injection motor encoder 351. The injection motor encoder 351 detects the rotation of the injection motor 350 and sends a signal indicating a detection result to the control unit 700. If the position of the screw 330 reaches a set position, switching (so called V/P switching) from the filling process to the holding pressure process is performed. The position at which the V/P switching is performed is also referred to a V/P switching position. The set speed of the screw 330 may be changed according to the position of the screw 330, the time, or the like.

In addition, in the filling process, after the position of the screw 330 reaches the set position, the screw 330 may be temporarily stopped at the set position, and thereafter, the V/P switching may be performed. Immediately before the V/P switching, instead of the screw 330 being stopped, the screw 330 may move forward or may move rearward at a very slow speed. Moreover, a screw position detector which detects the position of the screw 330 and a screw movement speed detector which detects the movement speed of the screw 330 are not limited to the injection motor encoder 351, and a general detector can be used.

In the holding pressure process, the injection motor 350 is driven to push the screw 330 forward, a pressure (hereinafter, also referred to as a "holding pressure") of the molding material on a front end portion of the screw 330 is held at a set pressure, and the molding material remaining inside the cylinder 310 is pressed toward the mold unit 800. Insufficient molding materials can be replenished by cooling shrinkage in the mold unit 800. For example, the holding pressure is detected using the pressure detector 360. The pressure detector 360 sends a signal indicating a detection result to the control unit 700. A set value of the holding pressure may be changed according to an elapsed time from the starting of the holding pressure process, or the like.

In the holding pressure process, the molding material inside the cavity space 801 in the mold unit 800 is gradually cooled, and when the holding pressure process is completed, an inlet of the cavity space 801 is closed by a solidified molding material. This state is referred to a gate seal and a backflow of the molding material from the cavity space 801 is prevented. A cooling process starts after the holding pressure process . In the cooling process, solidification of the molding material in the cavity space 801 is performed. In order to shorten a molding cycle time, the plasticizing process may be performed during the cooling process.

In addition, the injection unit 300 of the present embodiment is an inline and screw type injection unit. However, the injection unit 300 may be a preplasticizing type injection unit. The preplasticizing type injection unit supplies the melted molding material inside a plasticizing cylinder to an injection cylinder and injects the molding material from the injection cylinder into the mold unit. A screw is disposed to be rotatable or rotatable and movable forward or rearward in the plasticizing cylinder and a plunger is disposed to be movable forward or rearward in the injection cylinder.

In addition, the injection unit 300 of the present emb odiment is a horizontal type injection unit in which the ax ial direction of the cylinder 310 is the horizontal directi on. However, the injection unit 300 may be a vertical type injection unit in which the axial direction of the cylinder 310 is a vertical direction. The mold clamping unit combin ed with the vertical type injection unit 300 may be a verti cal type mold clamping unit or a horizontal type mold injec tion unit. Similarly, the mold clamping unit combined with the horizontal type injection unit 300 may be a horizontal type mold clamping unit or a vertical type mold clamping unit.

### (Movement Unit)

Similarly to the descriptions of the injection unit 300, in descriptions of the movement unit 400, the movement direction (left direction in Figs. 1 and 2) of the screw 330 during filling is referred to as a front side, and the movement direction (right direction in Figs. 1 and 2) of the screw 330 during the plasticizing is referred to as a rear side.

The movement unit 400 moves the injection unit 300 forward or rearward with respect to the mold unit 800. In addition, the movement unit 400 presses the nozzle 320 to the mold unit 800 to generate a nozzle touch pressure. The movement unit 400 includes a hydraulic pump 410, a motor 420 which is a drive source, a hydraulic cylinder 430 which is a hydraulic actuator, or the like.

The hydraulic pump 410 includes a first port 411 and a second port 412. The hydraulic pump 410 is a pump which can rotate in both directions and switches a rotation direction of the motor 420. Accordingly, a working liquid (for example, oil) is sucked from any one of first port 411 and the second port 412 and is discharged from the other, and thus, a liquid pressure is generated. In addition, the hydraulic pump 410 sucks the working liquid from a tank and can discharge the working liquid from any one of the first port 411 and the second port 412.

The motor 420 operates the hydraulic pump 410. The motor 420 drives the hydraulic pump 410 in the rotation direction corresponding to a signal from the control unit 700 and by the rotation torque corresponding to the control signal from the control unit 700. The motor 420 may be an electric motor or an electric servo motor.

The hydraulic cylinder 430 includes a cylinder body 431, a piston 432, and a piston rod 433. The cylinder body 431 is fixed to the injection unit 300. The piston 432 divides the inside of the cylinder body 431 into a front chamber 435 which is a first chamber and a rear chamber 436 which is a second chamber. The piston rod 433 is fixed to the stationary platen 110.

The front chamber 435 of the hydraulic cylinder 430 is connected to the first port 411 of the hydraulic pump 410 via a first flow path 401. The working liquid discharged from the first port 411 is supplied to the front chamber 435 via the first flow path 401, and thus, the injection unit 300 is pushed forward. The injection unit 300 moves forward, and thus, the nozzle 320 is pressed to the stationary mold 810. The front chamber 435 functions as a pressure chamber which generates the nozzle touch pressure of the nozzle 320 by the pressure of the working liquid supplied from the hydraulic pump 410.

Meanwhile, the rear chamber 436 of the hydraulic cylinder 430 is connected to the second port 412 of the hydraulic pump 410 via a second flow path 402. The working liquid discharged from the second port 412 is supplied to the rear chamber 436 of the hydraulic cylinder 430 via the second flow path 402, and thus, the injection unit 300 is pushed rearward. The injection unit 300 moves rearward and thus, the nozzle 320 is separated from the stationary mold 810.

In addition, in the present embodiment, the movement unit 400 includes the hydraulic cylinder 430. However, the present invention is not limited to this. For example, instead of the hydraulic cylinder 430, an electric motor and a motion conversion mechanism which converts a rotary motion of the electric motor into a linear motion of the injection unit 300 may be used.

### (Control unit)

For example, the control unit 700 includes a computer, and as shown in Figs. 1 and 2, the control unit 700 includes a Central Processing Unit (CPU) 701, a recording medium 702 such as a memory, an input interface 703, and an output interface 704. The control unit 700 performs various controls by causing the CPU 701 to execute a program stored in the recording medium 702. In addition, the control unit 700 receives a signal from the outside through the input interface 703 and transmits a signal to the outside through the output interface 704.

The control unit 700 repeatedly performs the mold closing process, the mold clamping process, the mold opening process, or the like to repeatedly manufacture the molding product. In addition, the control unit 700 performs the plasticizing process, the filling process, the holding pressure process, or the like between the mold clamping processes. A series of operations to obtain the molding product, for example, an operation from the start of the plasticizing process to the start of the next plasticizing process is also referred to as a "shot" or a "molding cycle". In addition, a time required for once shot is also referred to as a "molding cycle time".

For example, the once molding cycle includes the plasticizing process, the mold closing process, the mold clamping process, the filling process, the holding pressure process, the cooling process, the mold opening process, and the ejection process in this order. Here, this order is an order of the start of each process. The filling process, the holding pressure process, and the cooling process are performed between the start of the mold clamping process to the end of the mold clamping process. The end of the mold clamping process coincides with the start of the mold opening process. In addition, in order to shorten the molding cycle time, the plurality of processes may be simultaneously performed. For example, the plasticizing process maybe performed during the cooling process of the previous molding cycle, and in this case, the mold closing process may be performed at an initial stage of the molding cycle. In addition, the filling process may start during the mold closing process. Moreover, the ejection process may be started during the mold opening process. In a case where an on/off valve for opening or closing a flow path of the nozzle 320, the mold opening process may be started during the plasticizing process. Accordingly, even when the molding opening process is started during the plasticizing process, the molding material does not leak from the nozzle 320 if the on/off valve closes the flow path of the nozzle 320.

The control unit 700 is connected to an operation unit 750 or a display unit 760. The operation unit 750 receives an input operation from a user and outputs a signal corresponding to the input operation to the control unit 700. The display unit 760 displays an operation screen corresponding to the input operation in the operation unit 750, under the control of the control unit 700.

The operation screen is used for the setting of the injection molding machine 10 or the like. A plurality of operation screens are provided, and thus, are displayed to be switched or to overlap each other. The user operates the operation unit 750 while viewing the operation screen displayed on the display unit 760 to perform the setting (including an input of a set value) of the injection molding machine 10 or the like.

For example, the operation unit 750 and the display unit 760 may be configured of a touch panel to be integrated with each other. Inaddition, in the present embodiment, the operation unit 750 and the display unit 760 are integrated with each other. However, the operation unit 750 and the display unit 760 may be independently provided. In addition, a plurality of operation units 750 may be provided.

### (Details of Ejector Unit)

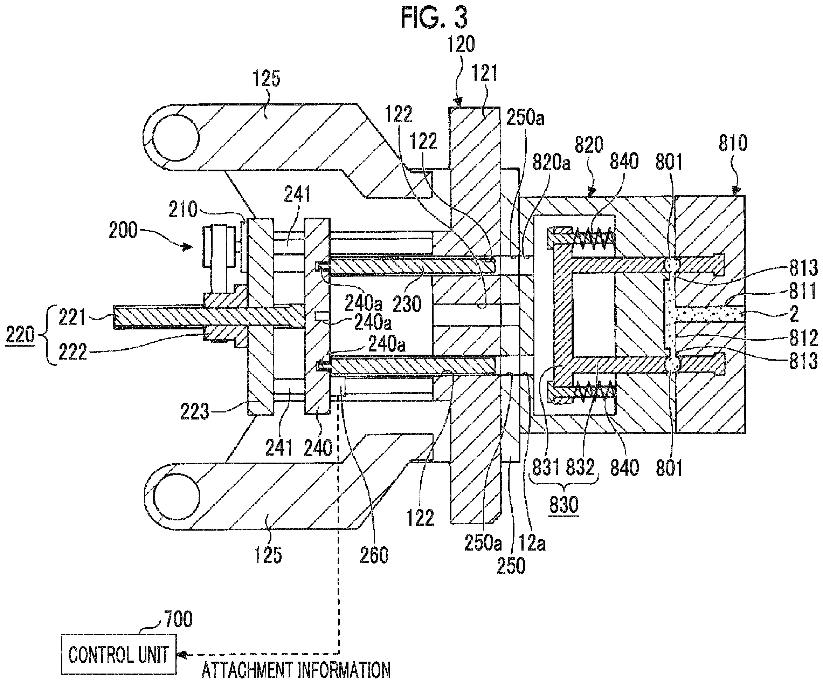

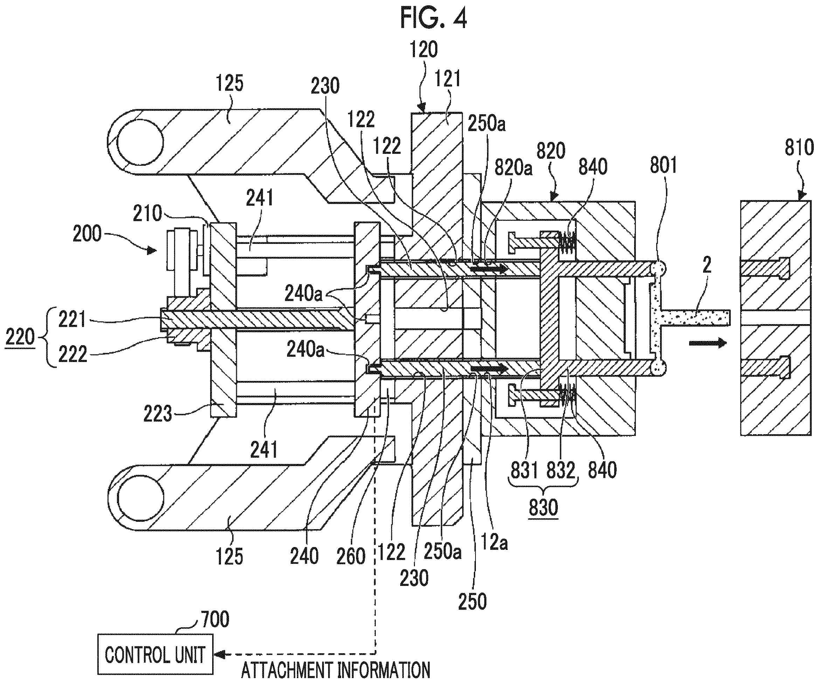

Fig. 3 is a view showing a state when the ejector unit according to the embodiment stands by. Fig. 4 is a view showing a state when the ejector unit according to the embodiment ejects the molding product.

The ejector unit 200 is attached to the movable platen 120. The movable platen 120 includes a movable platen body portion 121 to which the movable mold 820 is attached and movable platen link attachment portion 125 to which the pins of the first links 152 are attached. The movable platen body portion 121 and the movable platen link attachment portions 125 may be integrally formed with each other by casting.

The movable platen body portion 121 has a plate-shaped portion which is formed in an approximately rectangular shape when viewed in the mold opening and closing direction. Cutouts may be formed along the tie bars 140 at four corner portions of the plate-shaped portion. Through-holes through which the tie bars 140 are inserted may be formed instead of the cutouts. The plate-shaped portion has a plurality of through-holes 122 through which the ejector rods 230 are inserted. The number and dispositions of the through-holes 122 provided in the movable platen 120 are determined by a standard such as JIS (Japan Industrial Standard). The number and dispositions of the through-holes 122 are changed by a size of the movable platen 120 or the like.

In addition, the movable platen body portion 121 may further have a tubular portion which protrudes rearward from an outer peripheral edge portion of the plate-shaped portion instead of the plate-shaped portion. The tubular portion is formed in a rectangular frame shape when viewed in the mold opening and closing directions and a space which accommodates at least a portion of the ejector unit 200 is formed inside the tubular portion.

For example, a pair of upper and lower movable platen link attachment portions 125 is provided on a surface (rear surface) of the movable platen body portion 121 facing the toggle support 130. A through-hole is formed on a distal end portion of each movable platen link attachment portion 125, a pin is inserted into the through-hole, and thus, the first link 152 is oscillatingly attached to the movable platen link attachment portion 125 via the pin.

As shown in Figs. 3 and 4, for example, the ejector unit 200 includes the ejector motor 210, the motion conversion mechanism 220, the ejector rods 230, the crosshead 240, the magnet clamp 250, a proximity sensor 260 which is a detection unit, or the like.

The ejector motor 210 is fixed to the movable platen 120. A rotary motion of the ejector motor 210 is transmitted to the motion conversion mechanism 220 via a belt or a pulley. However, the rotary motion may be directly transmitted to the motion conversion mechanism 220.

The motion conversion mechanism 220 converts the rotary motion of the ejector motor 210 into the linear motion of the crosshead 240. The linear motion of the crosshead 240 is transmitted to the ejector rods 230.

The motion conversion mechanism 220 has a screw shaft 221 and a screw nut 222 which is screwed to the screw shaft 221. A ball or a roller may be interposed between the screw shaft 221 and the screw nut 222. The screw shaft 221 penetrates the attachment plate 223 which is provided with a predetermined gap from the movable platen body portion 121 behind the movable platen body portion 121, and a front end portion of the screw shaft 221 is fixed to the crosshead 240. Meanwhile, the screw nut 222 is held to be rotatably and unmovable by the attachment plate 223.

If the ejector motor 210 is driven to rotate the screw nut 222, the screw shaft 221 or the crosshead 240 moves forward or rearward. In addition, a disposition of the screw shaft 221 or the screw nut 222 is not particularly limited. For example, the screw shaft 221 may be held to be rotatable and unmovable forward or rearward by the attachment plate 223 and the screw nut 222 may be fixed to the crosshead 240. In this case, if the ejector motor 210 is driven to rotate the screw shaft 221, the screw nut 222 or the crosshead 240 moves forward or rearward.

The crosshead 240 is movable forward or rearward along a guide rod 241 bridged between the attachment plate 223 and the movable platen body portion 121. A plurality of the guide rods 241 may be provided to prevent a rotation of the crosshead 240. In addition, the guide rods 241 may support any one of the attachment plate 223 and the movable platen body portion 121 in a cantilever manner.

The ejector rods 230 are attached to attachment portions 240a which are provided on a main surface of the crosshead 240 on the movable platen body portion 121 side. A screw hole is formed in each attachment portion 240a, and a rear end portion of the ejector rod 230 becomes a screw shaft. The rear end portion of the ejector rod 230 is screwed to the attachment portion 240a to be attached to the attachment portion 240a. The ejector rods 230 are movable forward or rearward in the through-holes 122 penetrating the movable platen 120 (more specifically, the movable platen body portion 121) in a front-rear direction, and are movable forward or rearward according to the forward or rearward movement of the crosshead 240. In Figs. 3 and 4, the number of the ejector rods 230 is two. However, the number of the ejector rods 230 may be one or three or more.

The front end portion of each ejector rod 230 comes into contact with the movable member 830, which is disposed to be movable forward or rearward inside the movable mold 820, through the through-hole 820a of the movable mold 820. The front end portion of the ejector rod 230 is not connected to the movable member 830. However, the front end portion may be connected to the movable member 830. In addition, in a case where the front end portion of the ejector rod 230 is connected to the movable member 830, a spring 840 may not be omitted.

An axial direction of the ejector rod 230 and an axial direction of the hole axis of the through-hole 820a are the X axis direction (right-left direction in Figs. 1 to 4). The hole axis of the through-hole 820a is positioned on approximately the same straight line as a straight line extending in the axis direction of the ejector rod 230. The same straight line is not limited to a fact that the hole axis of the through-hole 820a is completely on the same straight line as the straight line extending in the axial direction of the ejector rod 230, and deviation in degree of error is allowed.

If the ejector motor 210 is driven to move forward the ejector rods 230, the movable member 830 moves forward and ejects the molding product from the movable mold 820.

The magnet clamp 250 is a member which is formed in a plate shape and is provided on a main surface of the movable platen body portion 121 on the stationary platen 110 side. The magnet clamp 250 has a plurality of magnets, which generate a magnetic force for attaching the movable mold 820 on a main surface (a mold attachment surface) to which the movable mold 820 is attached, inside the magnet clamp 250. As the magnet, an electromagnet or the like is used. In the magnet clamp 250, it is possible to generate the magnetic force or eliminate the magnetic force on the mold attachment surface by supplying a current from an external power source to the magnets in the magnet clamp 250 when the movable mold 820 is attached or released. The magnetic force is generated or eliminated, and thus, the magnet clamp 250 can attach the movable mold 820 to the mold attachment surface or can release fixing of the movable mold 820.

The magnet clamp 250 has through-holes 250a which are positioned on the same straight lines as the hole axes of the through-holes 122 of the movable platen 120. The number and dispositions of the through-holes 250a are the same as the number and dispositions of the through-holes 122.

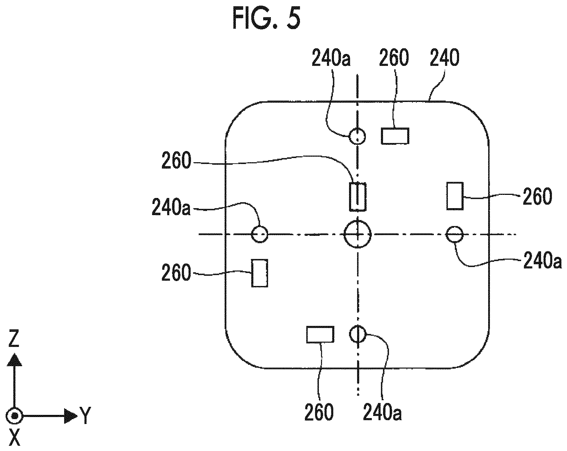

The proximity sensor 260 is provided on the main surface of the crosshead 240 on the movable platen body portion 121 side. As shown in Fig. 5, the proximity sensor 260 is provided near the attachment portion 240a of the ejector rod 230. When the ejector rod 230 is attached to the attachment portion 240a, the proximity sensor 260 is provided on the main surface of the crosshead 240 on the movable platen 120 side such that the proximity sensor 260 does not come into contact with the ejector rod 230.

In a case where each ejector rod 230 is attached to the attachment portion 240a, the proximity sensor 260 detects the ejector rod 230 and transmits a detection signal to the control unit 700. The proximity sensor 260 is provided near each attachment portion 240a, and thus, it is possible to check whether or not the ejector rod 230 is attached to each attachment portion 240a. Accordingly, it is possible to detect a position at which the ejector rod 230 is attached to the crosshead 240. Moreover, the detection signal is not limited to the case where the ejector rod 230 is detected, and the detection signal may be transmitted to the control unit 700 in a case where the ejector rod 230 is not attached to the attachment portion 240a. The control unit 700 receives a detection signal from the attachment portion 240a to which the ejector rod 230 is not attached, and thus, the control unit 700 can check that the ejector rod 230 is not attached. Therefore, the control unit 700 can detect the position at which the ejector rod 230 is attached to the crosshead 240.

The proximity sensor 260 can adopt various type sensors such as an optical sensor or a magnetic sensor.

In addition, a contact type switch may be used instead of a non-contact type proximity sensor 260.

The mold unit 800 includes a stationary mold 810 which is attached to the stationary platen 110 and a movable mold 820 which is attached to the movable platen 120. As shown in Fig. 3, the cavity space 801 is formed between the stationary mold 810 and the movable mold 820 when the mold is clamped. A molding material 2 reaches the cavity space 801 via a sprue 811 formed in the stationary mold 810, a runner 812 which branches off from a terminal end portion of the sprue 811, and a gate 813 which is provided on a terminal end portion of the runner 812.

The mold unit 800 has the movable member 830 which is disposed to be movable forward or rearward inside the movable mold 820. As shown in Fig. 3, the movable member 830 has a plate-shaped ejector plate 831 perpendicular to the front-rear direction and a rod-shaped ejector pin 832 extending forward from the ejector plate 831.

The ejector plate 831 is pushed forward by the ejector rods 230 which are disposed behind the ejector plate 831. In addition, the ejector plate 831 is pushed rearward by the springs 840 which are disposed in front of the ejector plate 831.

The ejector pins 832 extend forward from the ejector plate 831 and penetrate the movable mold 820. As shown in Fig. 3, the molding material 2 flowing through the runner 812 is attached to a front end portion of each ejector pin 832 and is solidified. The ejector pins 832 are used to eject the molding material 2 which is solidified in the runner 812.

The control unit 700 controls forward and rearward movements of the ejector rods. After the mold of the mold unit 800 is opened, the control unit 700 moves forward the ejector rods 230 to ejection positions shown in Fig. 4. Accordingly, the movable member 830 moves forward, and thus, the molding product is ejected from the movable mold 820. Thereafter, the control unit 700 moves the ejector rods 230 rearward from the through-holes 820a of the movable mold 820 and the through-holes 250a of the magnet clamp 250. In addition, the control unit 700 moves the ejector rods 230 rearward until the front end portions of the ejector rods 230 are positioned behind a front surface of the movable platen body portion 121. Accordingly, the ejector rods 230 move rearward to a standby position shown in Fig. 3.

When the ejector rods 230 move forward to the ejection positions shown in Fig. 4, the ejector rods 230 protrude forward from the front surface of the movable platen body portion 121 and are inserted into the through-holes 250a of the magnet clamp 250 and the through-holes 820a of the movable mold 820. In addition, the front end portion of each ejector rod 230 inserted into the through-hole 820a abuts against the ejector plate 831 and moves the ejector pin 832 forward.

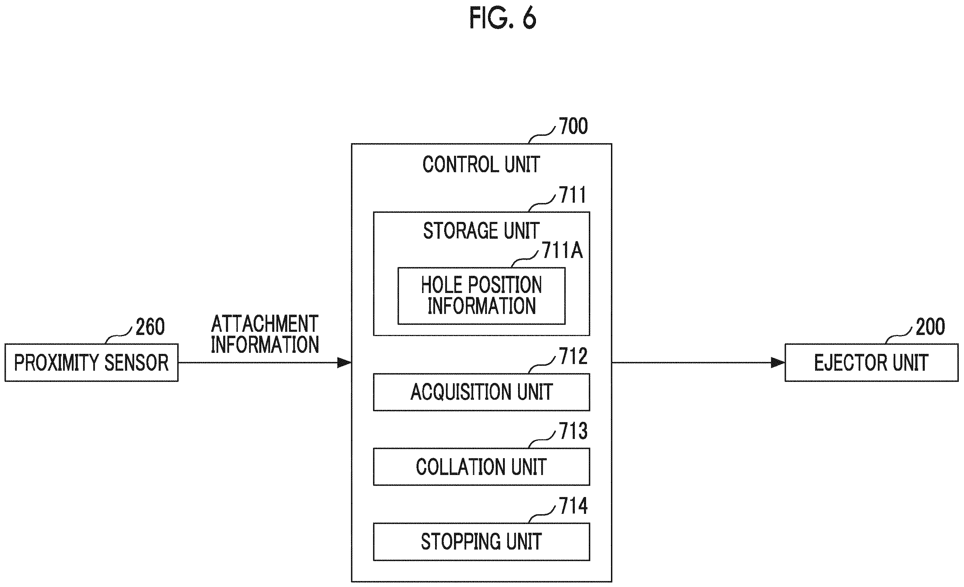

Fig. 6 is a functional block diagram showing components of a control unit according to the embodiment. Each function block shown in Fig. 6 is a conceptual block, and it is not necessarily physically configured as shown in the drawings. It is possible to configure all or a portion of respective functional blocks by functionally or physically dispersing and coupling in arbitrary units . All or a portion of each processing function performed in each functional block can be realized by a program executed by the CPU or can be realized as hardware by wired logic.

The control unit 700 includes a storage unit 711, an acquisition unit 712, a collation unit 713, and a stopping unit 714, and can control the forward and rearward movements of the ejector rods 230.

The storage unit 711 stores information on attachments of the ejector rods 230 with respect to the crosshead 240. The information includes mold information such as hole position information 711A for each mold unit 800 or a length of each ejector rod 230.

For example, the mold information can be recognized by reading identification information such as a two-dimensional code stuck to a portion outside the mold unit 800 by a reader and sending the read identification information to the control unit 700.

The hole position information 711A includes information which defines the positions of the through-holes 820a of the movable mold 820 when the movable mold 820 is attached to the movable platen 12.

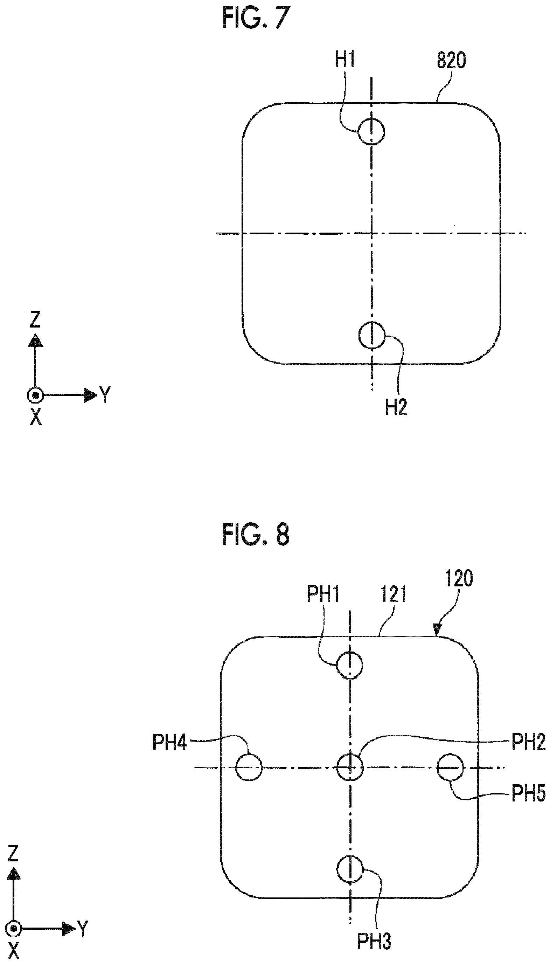

Fig. 7 shows an example of the hole position information of the through-holes 820a of the movable mold 820 stored in the hole position information 711A. As shown in Fig. 7, the positions of the through-holes 820a of the movable mold 820 are stored in the hole position information 711A as H1 and H2.

The acquisition unit 712 acquires the information on the attachments of the ejector rod 230 with respect to the crosshead 240. The information includes attachment information including attachment position information of the ejector rods 230. The attachment information includes information on the lengths or the like of the ejector rods 230 in addition of the attachment position information of the ejector rods 230. The attachment position information is information on the attachment positions of the ejector rods 230 attached to the attachment portions 240a, and in the present embodiment, the attachment position information can be acquired from the detection signal of the proximity sensor 260. The acquisition unit 712 acquires the detection signal, which is transmitted from the proximity sensor 260, as the attachment position information of the ejector rod 230.

The collation unit 713 collates the information stored in the storage unit 711 and the information acquired by the acquisition unit 712. In the present embodiment, the collation unit 713 collates the information (hole position information 711A) which is stored in the storage unit 711 and relates to the position at which the ejector rod 230 is attached and the attachment information including the information (attachment position information of the ejector rods 230) which is acquired by the acquisition unit 712 and relates to the attachment position of the ejector rod 230. The position at which the ejector rod 230 is attached is a first attachment portion which is disposed at a position on the same straight line as the hole axis of the through-hole 820a of the movable mold 820 whose position is defined by the hole position information 711A. In the present embodiment, the collation unit 713 checks that the ejector rod 230 is attached to the first attachment portion, which is the position where the ejector rod 230 is attached, of the attachment portions 240a of the crosshead 240, based on the hole position information 711A and the attachment position information.

Moreover, the collation unit 713 collates information which is stored in the storage unit 711 and relates to the position at which the ejector rod 230 is not attached and the information which is acquired by the acquisition unit 712 and relates to the attachment position of the ejector rod 230. The position at which the ejector rod 230 is not attached is a second attachment portion which is disposed at a position deviated from the straight line of the hole axis of the through-hole 820a of the movable mold 820 whose position is defined by the hole position information 711A. In the present embodiment, the collation unit 713 checks that the ejector rod 230 is not attached to the second attachment portion, which is the position where the ejector rod 230 is not attached, of the attachment portions 240a of the crosshead 240.

The first attachment portion is disposed at the position of the crosshead 240 on the same straight line as the hole axis of the through-hole 820a, and thus, the first attachment portion is positioned at a position, at which the ejector rod 230 is to be attached, of the attachment portion 240a of the crosshead 240.

The second attachment portion is disposed at the position of the crosshead 240 deviated from the same straight line as the hole axis of the through-hole 820a, and thus, the second attachment portion is positioned at a position, at which the ejector rod 230 should not to be attached, of the attachment portion 240a of the crosshead 240.

The ejector rod 230 is attached to the attachment portion 240a of the crosshead 240 through the through-hole, of which hole axis is disposed at the position on the same straight line as the first attachment portion or the second attachment portion, of the through-hole 122 of the movable platen 120 and the through-hole 250a of the magnet clamp 250.

The number and dispositions of the through-holes 122 of the movable platen 120 is determined by a standard such as JIS. The number and dispositions of the through-holes 250a of the magnet clamp 250 are the same as the number and dispositions of the through-holes 122, and each through-hole 250a is disposed on the same straight line as the hole axis of the through-hole 122 in the magnet clamp 250. In addition, the through-hole 122 and the through-holes 250a are positioned on the same straight line of the attachment portion 240a of the crosshead 240 in the axial direction of the ejector rod 230. Meanwhile, the through-hole 820a of the movable mold 820 is positioned on the same straight line as the hole axes of the through-hole 122 and the through-hole 250a. However, the number of the through-holes 820a is smaller than the number of each of the through-holes 122 and the through-holes 250a.

Accordingly, the attachment portions 240a of the crosshead 240 includes the position at which the ejector rod 230 is disposed on the straight line of the hole axis of the through-hole 820a of the movable mold 820, the position at which the ejector rod 230 is to be attached, the position at which the ejector rod 230 is disposed at the position deviated from the straight line of the hole axis of the through-hole 820a, and the position at which the ejector rod 230 should not be attached. The position at which the ejector rod 230 is to be attached is the position of the first attachment portion, and the position at which the ejector rod 230 should not be attached is the second attachment portion.

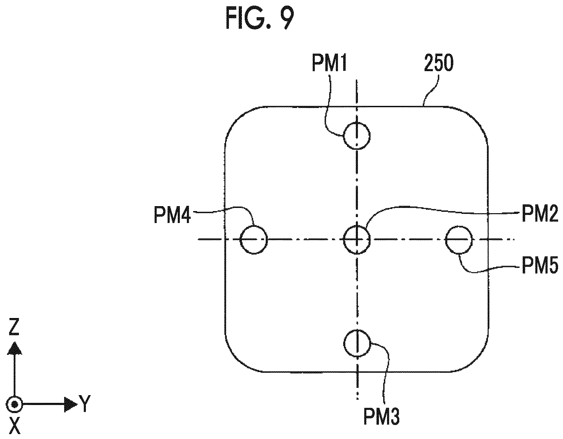

An example of the positions of the through-holes 122 of the movable platen 120 is shown in Fig. 8, and an example of the positions of the through-holes 250a of the magnet clamp 250 is shown in Fig. 9. As shown in Fig. 8, the through-holes 122 of the movable platen 120 are provided at positions of PH1 to PH5, and as shown in Fig. 9, the through-holes 250a of the magnet clamp 250 are provided at positions of the PM1 to PM5. The through-holes 820a of the movable mold 820 whose positions are defined by the hole position information 711A are positions of H1 and H2 shown in Fig. 7. In this case, the through-holes 122 of the movable platen 120, which are disposed on the same straight lines as the hole axes of the through-holes 820a positioned at H1 and H2, are PH1 and PH3, and the through-holes 250a of the magnet clamp 250, which are disposed on the same straight lines as the hole axes of the through-holes 820a positioned at H1 and H2, are PM1 and PM3.

Accordingly, when the ejector rods 230 are attached to the crosshead 240 through the through-holes 122 positioned at PH1 and PH3 and the through-holes 250a positioned at PM1 and PM3, the ejector rods 230 are attached to the first attachment portions. Meanwhile, when the ejector rods 230 are attached to the crosshead 240 through the through-holes 122 positioned at PH2, PH4, and PH5, and the through-holes 250a positioned at PM2, PM4, and PM5, the ejector rods 230 are attached to the second attachment portions.

A state when the ejector rods 230 are viewed from the movable mold 820 in a view in forward and rearward movement directions of the ejector rod 230 can be displayed on the display unit 760. In a case where it is determined that the ejector rods 230 are attached to all first attachment portions of the attachment portions 240a, the control unit 700 may display a mark of OK on a screen of the display unit 760. In a case where the control unit 700 determines that the ejector rods 230 are attached to any one of the second attachment portions of the attachment portions 240a, the control unit 700 may display a mark of NG on a screen of the display unit 760 or generates a sound to notify an operator.

In a case where it is determined that the ejector rods 230 are installed at the second attachment portions by the collation unit 713, the stopping unit 714 maintains a state where the ejector rods 230 penetrate the through-holes 122 of the movable platen 120 and the through-holes 250a of the magnet clamp 250. In addition, the stopping unit 714 has a function of performing an operation for stopping the ejector rods 230 such that the ejector rods 230 do not move rearward after the front end portions of the ejector rods 230 protrude forward from the movable platen body portion 121. Each ejector rod 230 is stopped such that the front end portion of the ejector rod 230 does not move rearward in a state where the front end portion protrudes forward from the movable platen body portion 121, it is possible to remove the ejector rod 230 by turning the ejector rod 230. Accordingly, in the case where the ejector rods 230 are attached to the second attachment portions of the attachment portions 240a of the crosshead 240, the attachment positions of the ejector rods 230 can be changed from the second attachment portions to the first attachment portions.

### (Check Method of Attachment State of Ejector Rod 230)

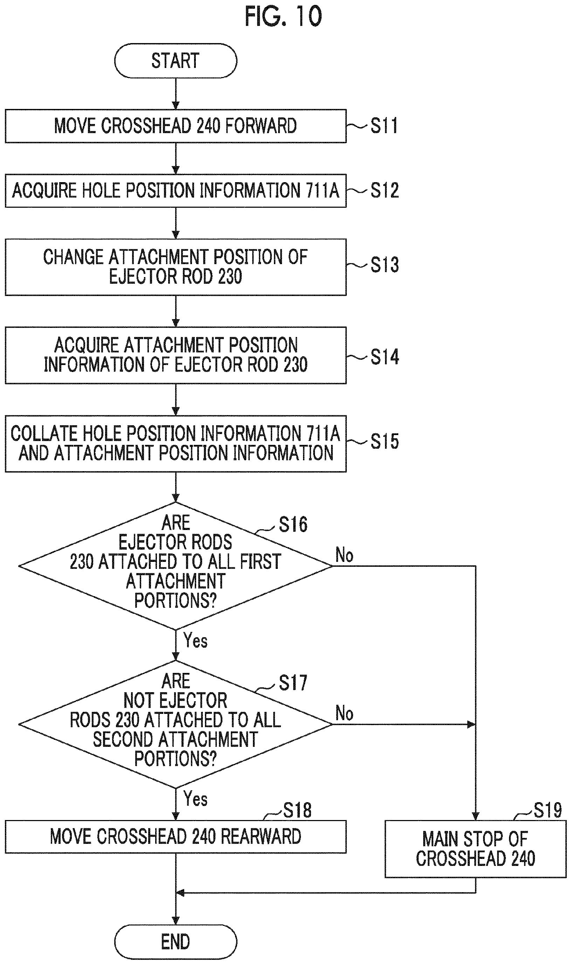

Next, a case where the mold unit 800 attached to the injection molding machine 10 is exchanged using the injection molding machine 10, a method of checking the attachment state of the ejector rod 230 when the ejector rod 230 attached to the crosshead 240 is replaced will be described with reference to Fig. 10. Fig. 10 is a flowchart explaining the method of checking the attachment state of the ejector rod 230. In addition, in the description of Fig. 10, the mold unit 800 which is previously attached to or is removed from the mold clamping unit 100 of the injection molding machine 10 is referred to a previous mold unit, and the mold unit 800 which is attached to the mold clamping unit 100 newly is a next mold unit.

The previous mold unit 800 is removed from the mold clamping unit 100, that is, the previous mold unit 800 is removed before the next mold unit 800 is attached. Thereafter, in a state where the previous mold unit 800 is removed, the ejector motor 210 is driven to move the crosshead 240 forward (Step S11). The ejector rods 230 which are attached to the crosshead 240 in advance pass through the through-holes 122 of the movable platen body portion 121 and the through-holes 250a of the magnet clamp 250 and protrude forward from the through-holes 250a of the magnet clamp 250. The previous mold unit 800 is removed in advance, and the front end portion of the ejector rod 230 protrudes forward from the movable platen body portion 121. Therefore, the ejector rods 230 attached to the crosshead 240 are turned manually by hands of the operator and are removed from the attachment portions 240a, and thus, the ejector rods 230 can be removed from the crosshead 240.

Subsequently, the control unit 700 acquires a mold condition of the next mold unit 800 and acquires the hole position information 711A from the acquired mold condition (Step S12). The identification information such as a two-dimensional code stuck to a portion outside the next mold unit 800 is read by a reader and is transmitted to the control unit 700, and thus, the mold condition is acquired by the control unit 700.

Subsequently, the ejector rods 230 are removed, which are attached to the attachment portions 240a of the ejector rod 230 provided on the main surface of the crosshead 240 which has moved forward on the movable platen body portion 121 side. In addition, rear end portions of the ejector rods 230 are screwed to the attachment portions 240a positioned at the positions corresponding to the through-holes 820a of the movable mold 820 of the next mold unit 800 of the attachment portions 240a, and the positions of the ejector rods 230 attached to the attachment portion 240a are changed (Step S13).

Subsequently, the attachment information including the attachment position information of the ejector rods 230 is acquired by the control unit 700. As described above, the attachment information includes information relating to the attachment position information of the ejector rod 230, the lengths of the ejector rods 230, or the like. The attachment position information is the information relating to the attachment positions of the ejector rods 230 attached to the attachment portions 240a. In the present embodiment, the control unit 700 receives the detection signals transmitted from the proximity sensors 260 which are installed near the attachment portions 240a of the crosshead 240. The control unit 700 acquires the attachment position information of the ejector rods 230, based on the detection signals transmitted from the proximity sensors 260 (Step S14).

Subsequently, the control unit 700 collates the hole position information 711A with the attachment information of the ejector rods 230 acquired by the acquisition unit 712 (Step S15) . The control unit 700 collates whether all the ejector rods 230 attached to the crosshead 240 are attached to the first attachment portions of the crosshead 240 or the second attachment portions.

As described above, the number and dispositions of the through-holes 122 of the movable platen 120 and the through-holes 250a of the magnet clamp 250 are the same as each other, and the hole axis of each through-hole 122 and the hole axis of each through-hole 250a are positioned on the same straight line as each other and are positioned on the attachment portion 240a of the crosshead 240. Meanwhile, the through-hole 820a of the movable mold 820 is disposed on the same straight line as the hole axes of the through-hole 122 and the through-hole 250a. However, the number of the through-holes 820a is smaller than the number of each of the through-holes 122 and the through-holes 250a. Accordingly, the attachment portion 240a of the crosshead 240 is any one of the first attachment portion and the second attachment portion.

The control unit 700 checks whether or not the ejector rods 230 are attached to all the first attachment portions of the attachment portions 240a of the crosshead 240 (Step S16).

For example, the through-holes 820a of the movable mold 820 are positioned at two positions of H1 and H2 shown in Fig. 7. In this case, the through-holes 122 of the movable platen 120 which are positioned at the same straight lines as the hole axes of the through-holes 820a positioned at the positions H1 and H2 shown in Fig. 7 are the positions of PH1 and PH3 shown in Fig. 8, and through-holes 250a of the magnet clamp 250 are positioned at the positions of PM1 and PM3 in Fig. 9.

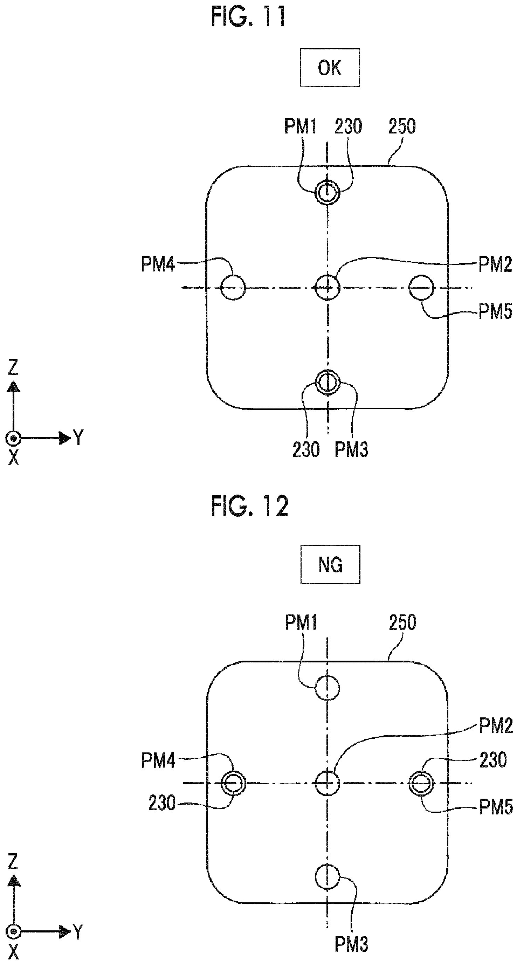

Fig. 11 shows a state when the ejector rods 230, which are inserted into the through-holes 122 and the through-holes 250a and attached to the attachment portions 240a, are viewed from the movable mold 820 side in a view in the forward and rearward movement directions of the ejector rod 230. As shown in Fig. 11, the ejector rods 230 are inserted into the PM1, PM3, PH1 (refer to Fig. 8), and PH3 (refer to Fig. 8) and are attached to the attachment portions 240a. In this case, the control unit 700 determines that the ejector rods 230 are attached to the first attachment portions of the attachment portions 240a of the crosshead 240. The next mold unit 800 is attached to the injection molding machine 10, and even when the ejector rods 230 move toward the movable mold 820 side, the ejector rods 230 do not collide with the movable mold 820.

Meanwhile, the through-holes 122 of the movable platen 120, which are disposed at positions deviated from the hole axes of the through-holes 820a positioned at H1 and H2 shown in Fig. 7, are positioned at PH2, PH4, and PH5 shown in Fig. 8. Similarly, the through-holes 250a of the magnet clamp 250, which are disposed at positions deviated from the hole axes of the through-holes 820a positioned at H1 and H2 shown in Fig. 7, are positioned at PM2, PM4, and PM5 shown in Fig. 9.

Fig. 12 shows a state when the ejector rods 230, which are inserted into the through-holes 122 and the through-holes 250a and attached to the attachment portions 240a, are viewed from the movable mold 820 side in a view in the forward and rearward movement directions of the ejector rod 230. As shown in Fig. 12, the ejector rods 230 are inserted into PM4 and PH4 (refer to Fig. 7) and PM5 and PH5 (refer to Fig. 7), and are attached to the attachment portions 240a. In this case, the control unit 700 determines that the ejector rods 230 are attached to the second attachment portions of the attachment portions 240a of the crosshead 240. If the next mold unit 800 is attached to the injection molding machine 10 and the ejector rods 230 move forward to the movable mold 820 side, the ejector rods 230 collide with the movable mold 820.

As shown in Figs. 11 and 12, the state when the ejector rods 230 are viewed from the movable mold 820 in a view in the forward and rearward movement directions of the ejector rod 230 can be displayed on the display unit 760. As shown in Fig. 11, in a case where it is determined that the ejector rods 230 are attached to all the first attachment portions of the attachment portions 240a, the display unit 760 can display the mark of OK on the screen. As shown in Fig. 12, in a case where it is determined that the ejector rod 230 is attached to any one of the second attachment portions of the attachment portions 240a, the display unit 760 can display the mark of NG on the screen.

In Step S16, in a case where the control unit 700 determines that the ejector rods 230 are attached to all the first attachment portions of the attachment portions 240a, the control unit 700 checks whether or not the ejector rods 230 are attached to all the second attachment portions of the attachment portions 240a (Step S17).

In Step S17, the control unit 700 determines that the ejector rods 230 are not attached to all the second attachment portions of the attachment portions 240a, the control unit 700 drives the ejector motor 210 to move the crosshead 240 rearward. The ejector rods 230 are attached to the crosshead 240, and thus, the ejector rods 230 are move rearward according to the rearward movement of the crosshead 240. The control unit 700 moves the ejector rods 230 from the through-holes 820a of the movable mold 820 and the through-holes 250a of the magnet clamp 250. In addition, the ejector rods 230 are moved rearward such that the front end portions of the ejector rods 230 are positioned behind the front surface of the movable platen body portion 121 (Step S18) .

Thereafter, the next mold unit 800 is attached to the mold clamping unit 100.

Meanwhile, in Step S16, in a case where the control unit 700 determines that the ejector rods 230 are not attached to all the first attachment portions of the attachment portions 240a, the control unit 700 does not drive the ejector motor 210 to maintain a stopped state of the crosshead 240. In addition, the state where the ejector rods 230 penetrate the through-holes 122 of the movable platen 120 and the through-holes 250a of the magnet clamp 250 is maintained. In addition, after the front end portions of the ejector rods 230 protrude forward from the movable platen body portion 121, the stopped states of the ejector rods 230 are maintained such that the ejector rods 230 do not move rearward (Step S19).

In Step S17, the control unit 700 determines that the ejector rods 230 are attached to any one of the second attachment portions of the attachment portions 240a. In this case, similarly, the control unit 700 maintains the stopped state of the crosshead 240 such that the ejector motor 210 is not driven and maintains the stopped states of the ejector rods 230 (Step S19).

Moreover, in Fig. 10, in Step S13, the ejector rods 230 attached to the crosshead 240 in advance are removed, other ejector rods 230 are replaced on the crosshead 240. However, in Step S13, in the case where the ejector rods 230 are not attached to the crosshead 240, only new ejector rod 230 may be attached to the crosshead 240.

In Fig. 10, the process (Step S12) of acquiring the hole position information 711A is performed after the process (Step S11) of moving the crosshead 240 forward. However, this order is not limited. Step S12 may be performed before Step S11, may be performed after the process (Step S13) of acquiring the attachment information of the ejector rods 230, or maybe performed after the process (Step S14) of acquiring the attachment information of the ejector rods 230.

In the injection molding machine 10 having the above-described configuration, it is possible to check whether or not the ejector rods 230 attached to the crosshead 240 are attached to the first attachment portions disposed on the straight lines as the through-holes 820a of the movable mold 820 when the mold unit 800 is attached to the crosshead 240. Accordingly, when the mold unit 800 is exchanged and the next mold unit 800 is attached to the injection molding machine 10, even when the ejector rods 230 move the movable mold 820 side, the ejector rods 230 can pass through the through-holes 820a of the movable mold 820. It is possible to prevent the ejector rod 230 from colliding with the movable mold 820.

Accordingly, in the injection molding machine 10, the ejector rods 230 push the movable mold 820, and thus, the movable mold 820 is separated from the magnet clamp 250, and it is possible to prevent the movable mold 820 from falling from the magnet clamp 250. In addition, it is possible to prevent the ejector rods 230 from colliding with the movable mold 820 and being deformed.

### (Modification and Improvement)

Hereinbefore, the embodiment of the injection molding machine or the like is described. However, the present invention is not limited to the above-described embodiment or the like, and various modifications and improvements can be made within a range of the scope of the present invention described in claims.

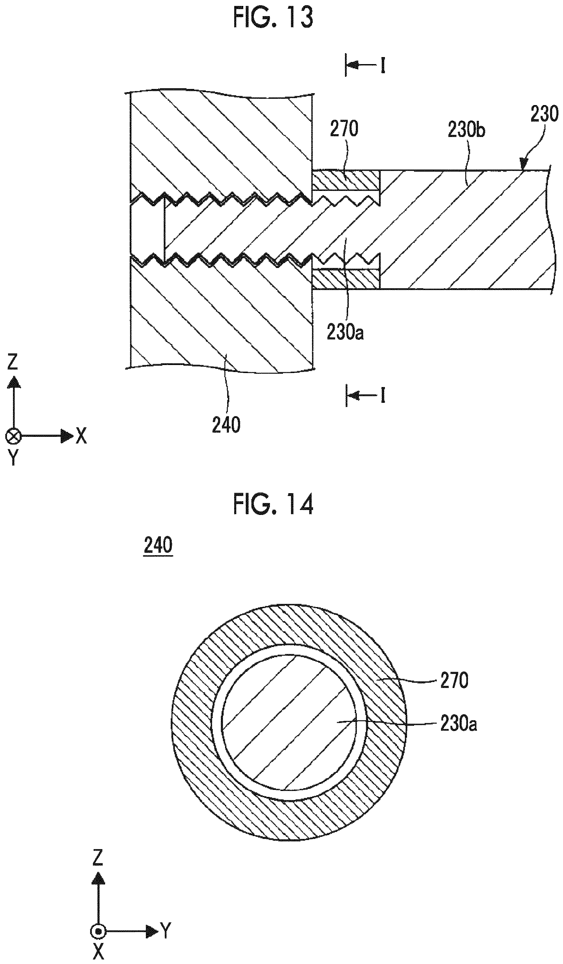

In the present embodiment, the attachment position is detected as the information on the attachment of the ejector rod 230 using the proximity sensor 260 as the detection unit. However, the present invention is not limited to this. For example, looseness in the attachment portion 240a of the crosshead 240 of the ejector rod 230 may be detected as the information on the attachment of the ejector rod 230 using a pressure sensor as the detection unit. An example of a state where the pressure sensor is applied to the ejector rod 230 as the detection unit is shown in Figs. 13 and 14. Fig. 13 is a partially enlarged sectional view showing an example of the ejector rod 230 on which the pressure sensor is mounted, and Fig. 14 is a view when viewed in a direction I-I in Fig. 13. As shown in Figs. 13 and 14, the pressure sensor 270 is formed in a ring shape, and is provided to have a gap between the pressure sensor 270 and a rear end portion 230a on an outer peripheral surface of the rear endportion 230a of the ejector rod 230 inserted into the attachment portion 240a. The pressure sensor 270 is installed in a state where the pressure sensor 270 is interposed between the surface of the crosshead 240 and a main body 230b of the ejector rod 230.

The pressure sensor 270 detects a contact pressure between the surface of the crosshead 240 and the main body 230b of the ejector rod 230, and transmits a detection signal to the control unit 700. The pressure sensor 270 is provided in each ejector rod 230, and thus, the control unit 700 can check tightness of each ejector rod 230 to the attachment portion 240a. As a result, the control unit 700 can measure the looseness in the attachment portions 240a of each ejector rod 230. In a case where the control unit 700 determines that the looseness is generated in the attachment portion 240a of any ejector rod 230, the control unit 700 may display a mark on the screen of the display unit 760 or may generate a sound such that the operator is notified. In this case, the operator retightens the ejector rod 230 loosely attached to the attachment portion 240a.

In addition, the control unit 700 can detect the position of each ejector rod 230 in addition to the looseness in the attachment portion 240a of the ejector rod 230 from the detection signal of each pressure sensor 270, as the information on the attachment of the ejector rod 230. In this case, the control unit 700 collates the hole position information 711A and the detection signal of the pressure sensor 270, and in the same manner as described above, it is collated that all the ejector rods 230 are attached to which of the first attachment portions and the second attachment portions of the crosshead 240. In the case where the control unit 700 determines that the ejector rod 230 is attached to any one of the second attachment portions of the attachment portions 240a, the control unit 700 may display the mark on the screen of the display unit 760 such that the operator or the like is notified. In this case, the operator replaces the ejector rod 230.

For example, for the pressure sensor 270, a semiconductor pressure sensor using a piezo-resistance effect or the like can be used. Although the pressure sensor 270 is formed in a ring shape, the pressure sensor 270 may not be formed in a ring shape.

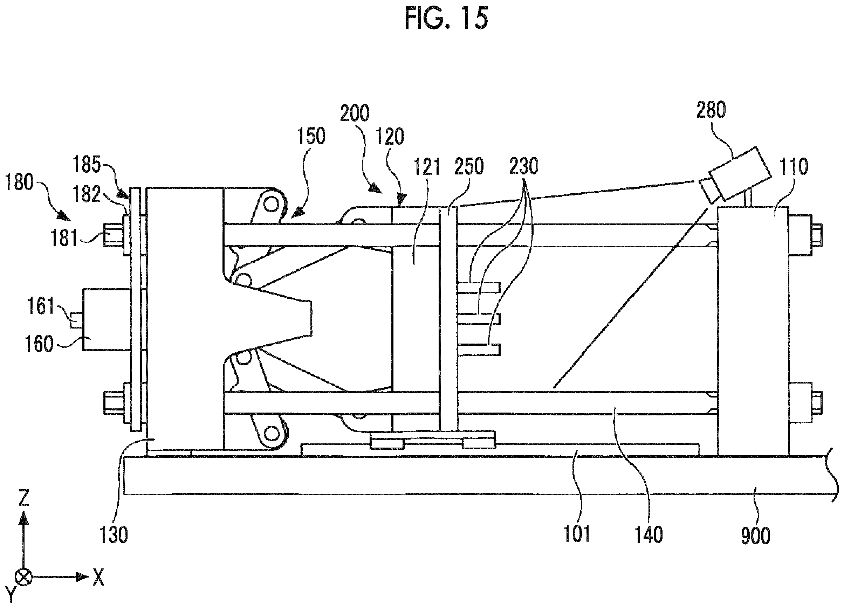

In the present embodiment, as the detection unit which detects the position of the ejector rod 230, an imaging device may be used instead of the proximity sensor 260. Fig. 15 shows an example of a state in which the imaging device is applied to the ejector unit 200 as the detection unit. Fig. 15 is a side view showing an example of the ejector unit 200 on which the imaging device is mounted. As shown in Fig. 15, an imaging device 280 is provided at the upper end portion of the stationary platen 110 such that the entire surface of the main surface of the magnet clamp 250 on the stationary platen 110 side can be captured. The imaging device 280 captures the entire surface of the stationary platen 110 side and transmits the captured image to the control unit 700. From the image captured by the imaging device 280, the ejector rod 230 being attached to each attachment portion 240a can be checked, and thus, the control unit 700 can acquire the attachment position information of the ejector rod 230.

The control unit 700 collates the hole position information 711A and the image captured by the imaging device 280 as the attachment position information. In the case where the control unit 700 determines that the ejector rods 230 are attached to all the first attachment portions among the attachment portions 240a, the control unit 700 may display the mark of OK on the screen of the display unit 760. In the case where the control unit 700 determines that the ejector rod 230 is attached to any one of the second attachment portions, the control unit 700 may display the mark of NG on the screen of the display unit 760 or may generate a sound such that the operator is notified. In this case, the operator replaces the ejector rod 230.

Specifically, a camera or the like can be used as the imaging device 280.

In addition, the control unit 700 may analyze and acquire the length of the ejector rod 230 as the information on the attachment, using the image captured by the imaging device 280. In this case, the control unit 700 collates the length of the ejector rod 230 stored as mold information in the storage unit 711 and the length of the ejector rod 230 acquired from the image captured by the imaging device 280 as information on the attachment. If the control unit 700 determines that the lengths of all the ejector rods 230 acquired as the information on the attachment are the same as the lengths of the ejector rods 230 stored in the storage unit 711, the control unit 700 may display the mark of OK on the screen of the display unit 760. Meanwhile, in a case where the control unit 700 determines that the length of any one of the ejector rods 230 acquired as the information on the attachment is different from the length of the ejector rod 230 stored in the storage unit 711, in the same manner as described above, the display unit 760 displays the mark on the screen such that the operator or the like is notified, and the operator replaces the ejector rod 230.

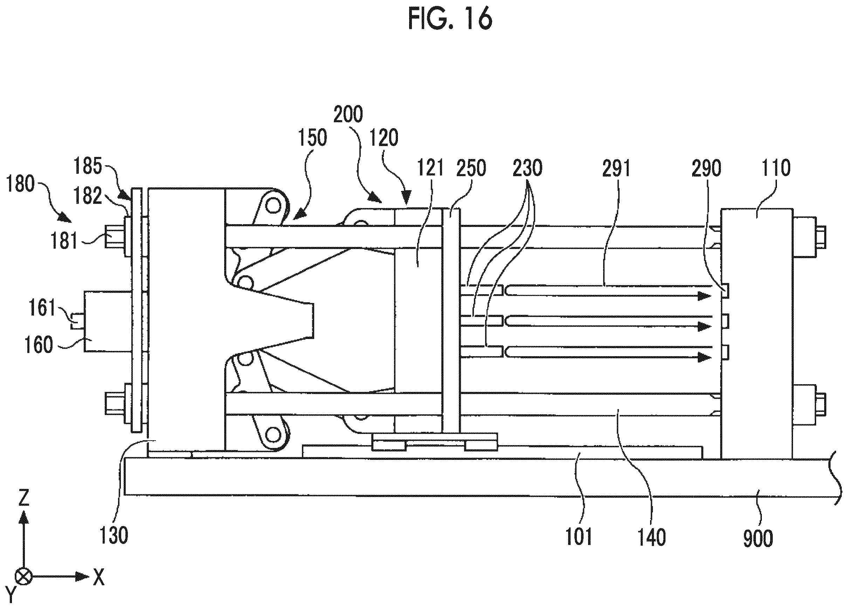

In the present embodiment, a laser irradiation unit may be used instead of the proximity sensor 260 as the detection unit which detects the position of the ejector rod 230. Fig. 16 shows an example of a state where the laser irradiation unit is applied to the ejector unit 200 as the detection unit. Fig. 16 is a side view showing an example of an ejector unit 200 on which the laser irradiation unit is mounted. As shown in Fig. 16, a laser irradiation unit 290 is provided on the surface of the stationary platen 110 facing the movable platen 120. The laser irradiation unit 290 is provided such that an irradiation direction of a laser light 291 emitted from the laser irradiation unit 290 is set at the same straight line as the hole axis of the through-hole 820a of the movable mold 820 when the movable mold 820 is attached to the mold clamping unit 100.

The laser irradiation unit 290 measures a time when the laser light 291 is emitted from the laser irradiation unit 290 toward the main surface side of the magnet clamp 250 and the emitted laser light 291 is returned to the laser irradiation unit 290. The laser irradiation unit 290 transmits a detection result to the control unit 700.

In a case where the laser light 291 emitted from the laser irradiation unit 290 is emitted toward the front end portion of the ejector rod 230, the laser light 291 is reflected by the front end portion of the ejector rod 230 and is returned to the laser irradiation unit 290 side.

The laser light 291 is emitted toward the through-hole 250a into which the ejector rod 230 is not inserted. In this case, the laser light 291 passes through the through-hole 250a of the magnet clamp 250 and the through-hole 122 of the movable platen 120, is reflected by the attachment portion 240a of the crosshead 240, and is returned to the laser irradiation unit 290 side.

In a case where the laser light 291 is emitted toward the position at which the through-hole 250a of the magnet clamp 250 does not exist, the laser light 291 is reflected by the surface of the magnet clamp 250 and is returned to the laser irradiation unit 290 side.

The control unit 700 measures a return time when the laser light 291 emitted from each laser irradiation unit 290 is returned to the laser irradiation unit 290 and can detect the position at which the ejector rod 230 is attached to the crosshead 240, and thus, the control unit 700 can acquire the attachment position information of the ejector rod 230. The control unit 700 collates the hole position information 711A and the position of the ejector rod 230 detected as the attachment position information. In addition, in a case where the control unit 700 determines that the ejector rods 230 are attached to all the first attachment portions of the attachment portions 240a, the control unit 700 may display the mark of OK on the screen of the display unit 760. Meanwhile, in a case where the control unit 700 determines that the ejector rod 230 is attached to any one of the second attachment portions of the attachment portions 240a, in the same manner as described above, the control unit 700 may notify this to the operator or the like. In this case, the operator replaces the ejector rod 230.

In addition, the control unit 700 may acquire the length of the ejector rod 230 as the information on the attachment from the return time of the laser light 291. In this case, the control unit 700 collates the length of the ejector rod 230 stored in the storage unit 711 as the mold information and the length of the ejector rod 230 acquired from the return time of the laser light 291 as the attachment information. In addition, in a case where the control unit 700 determines that the lengths of all the ejector rods 230 acquired as the attachment information are the same as the lengths of the ejector rods 230 stored in the storage unit 711, in the same manner as described above, the control unit 700 may display the mark of OK on the screen of the display unit 760. Meanwhile, in a case where the control unit 700 determines that a length of any ejector rod 230 acquired as the attachment information is different from the length of the ejector rod 230 stored in the storage unit 711, in the same manner as described above, the control unit 700 displays a mark on the screen of the display unit 760 such that the operator or the like is notified, and thus, the operator replaces the ejector rod 230.

In the present embodiment, only the proximity sensor 260 is used as the detection unit. One or more of the proximity sensor 260, the pressure sensor 270 shown in Figs. 13 and 14, the imaging device 280 shown in Fig. 15, and the laser irradiation unit 290 shown in Fig. 16 may be combined with each other.

The ejector unit 200 includes the magnet clamp 250 and attaches the movable mold 820 to the movable platen 120 using the magnet clamp 250. However, the ejector unit 200 may not include the magnet clamp 250, and the movable mold 820 may be attached to the movable platen 120 by a bolt or the like.

In the present embodiment, the ejector unit 200 is attached to the movable platen 120. However, the ejector unit 200 may be attached to the stationary platen 110.

In addition, in a case where the mold clamping unit 100 is a vertical type mold clamping unit, the ejector unit 200 may be attached to the lower platen. As described above, the lower platen may be the movable platen or the stationary platen.

### Brief Description of the Reference Symbols

- 10:: injection molding machine
- 100:: mold clamping unit
- 120:: movable platen
- 121:: movable platen body portion
- 122, 250a, 820a:: through-hole
- 200:: ejector unit
- 230:: ejector rod
- 240:: crosshead
- 240a:: attachment position
- 250:: magnet clamp
- 260:: proximity sensor
- 270:: pressure sensor
- 280:: imaging device
- 290:: laser irradiation unit
- 800:: mold unit
- 820:: movable mold

## Claims

1. An injection molding machine (10) comprising:
an ejector rod (230) for ejecting a molding product;
a crosshead (240) to which the ejector rod (230) is attached; and
a control unit (700) which controls a forward movement or rearward movement of the ejector rod (230),
**characterized in that** the control unit (700) includes
a storage unit (711) in which information on an attachment of the ejector rod (230) with respect to the crosshead (240) is stored,
an acquisition unit (712) configured to acquire the information on the attachment of the ejector rod (230) with respect to the crosshead (240), and
a collation unit (713) configured to collate the information stored in the storage unit (711) and the information acquired by the acquisition unit (712).

2. The injection molding machine (10) according to claim 1,
wherein the collation unit (713) is configured to collate information which is stored in the storage unit (711) and relates to a position at which the ejector rod (230) is attached and information which is acquired by the acquisition unit (712) and relates to an attachment position of the ejector rod (230).

3. The injection molding machine (10) according to claim 1 or 2,
wherein the collation unit (713) is configured to collate information which is stored in the storage unit (711) and relates to a position at which the ejector rod (230) is not attached and information which is acquired by the acquisition unit (712) and relates to an attachment position of the ejector rod (230).

## Patentansprüche

1. Spritzgießmaschine (10), umfassend:
eine Auswerferstange (230) zum Auswerfen eines Formprodukts;
einen Kreuzkopf (240), an dem die Auswerferstange (230) angebracht ist;
eine Steuereinheit (700), die eine Vorwärtsbewegung oder Rückwärtsbewegung der Auswerferstange (230) steuert,
**dadurch gekennzeichnet, dass**
die Steuereinheit (700) enthält
eine Speichereinheit (711), in der Information über eine Anbringung der Auswerferstange (230) bezüglich des Kreuzkopfes (240) gespeichert ist,
eine Erfassungseinheit (712), die zum Erfassen der Information über die Anbringung der Auswerferstange (230) bezüglich des Kreuzkopfs (240) konfiguriert ist, und
eine Kollationseinheit (713), die zum Kollationieren der Information, die in der Speichereinheit (711) gespeichert ist, und der Information, die durch die Erfassungseinheit (712) erfasst wird, konfiguriert ist.

2. Spritzgießmaschine (10) nach Anspruch 1,
wobei die Kollationseinheit (713) zum Kollationieren von Information, die in der Speichereinheit (711) gespeichert ist und sich auf eine Position bezieht, an der die Auswerferstange (230) angebracht ist, und von Information, die durch die Erfassungseinheit (712) erfasst wird und sich auf eine Anbringungsposition der Auswerferstange (230) bezieht, konfiguriert ist.

3. Spritzgießmaschine (10) nach Anspruch 1 oder 2,
wobei die Kollationseinheit (713) zum Kollationieren von Information, die in der Speichereinheit (711) gespeichert ist und sich auf eine Position bezieht, an der die Auswerferstange (230) nicht angebracht ist, und von Information, die durch die Erfassungseinheit (712) erfasst wird und sich auf eine Anbringungsposition der Auswerferstange (230) bezieht, konfiguriert ist.

## Revendications

1. Une machine de moulage par injection (10) comprenant :
une tige d'éjection (230) destinée à éjecter un produit de moulage ;
une crosse (240) sur laquelle la tige d'éjection (230) est fixée ;
et
une unité de commande (700) qui contrôle un mouvement vers l'avant ou un mouvement vers l'arrière de la tige d'éjection (230),
**caractérisée en ce que**
l'unité de commande (700) comprend
une unité de stockage (711) dans laquelle des informations sur une fixation de la tige d'éjection (230) par rapport à la crosse (240) sont stockées,
une unité d'acquisition (712) configurée pour acquérir les informations sur la fixation de la tige d'éjection (230) par rapport à la crosse (240), et
une unité de collecte (713) configurée pour collecter les informations stockées dans l'unité de stockage (711) et les informations acquises par l'unité d'acquisition (712).

2. La machine de moulage par injection (10) selon la revendication 1, dans laquelle l'unité de collecte (713) est configurée pour collecter les informations qui sont stockées dans l'unité de stockage (711) et qui concernent une position dans laquelle la tige d'éjection (230) est fixée, et les informations qui sont acquises par l'unité d'acquisition (712) et qui concernent une position de fixation de la tige d'éjection (230).

3. La machine de moulage par injection (10) selon la revendication 1 ou 2, dans laquelle l'unité de collecte (713) est configurée pour collecter les informations qui sont stockées dans l'unité de stockage (711) et qui concernent une position dans laquelle la tige d'éjection (230) n'est pas fixée, et les informations qui sont acquises par l'unité d'acquisition (712) et qui concernent une position de fixation de la tige d'éjection (230).
